# EUROPEAN PATENT SPECIFICATION

(11) **EP 2 003 866 B1**
(45) Date of publication and mention of the grant of the patent: **11.06.2014**
(21) Application number: 06729543.6
(22) Date of filing: 20.03.2006
(51) Int. Cl.: H04M 3/54, G06Q 30/00, H04M 7/00, H04N 21/414

(54) **CONNECTION DEVICE, CONNECTION METHOD, AND CONNECTION PROGRAM**
VERBINDUNGSEINRICHTUNG, VERBINDUNGSVERFAHREN UND VERBINDUNGSPROGRAMM
DISPOSITIF, PROCEDE ET PROGRAMME DE CONNEXION

(43) Date of publication of application: 17.12.2008
(73) Proprietor: FUJITSU LIMITED, Kawasaki-shi, Kanagawa 211-8588 (JP)
(72) Inventor: NAITO, Hirohisa, Kawasaki-shi, Kanagawa 211-8588 (JP); KII, Takahiro, Kawasaki-shi, Kanagawa 211-8588 (JP); OZAKI, Toru, Kawasaki-shi, Kanagawa 211-8588 (JP)
(74) Representative: Stebbing, Timothy Charles
(86) International application number: PCT/JP2006/305575
(87) International publication number: WO 2007/108099

(56) References cited:
- WO-A1-01/80049
- DE-A1- 10 119 808
- JP-A- 2004 309 836
- JP-A- 2005 159 958
- JP-A- 2006 071 852
- JP-U- 03 085 050
- US-A1- 2003 158 624

## Description

### TECHNICAL FIELD

The present invention relates to a technology for establishing a connection from a portable terminal.

### BACKGROUND ART

There are conventional technologies for receiving a request from a portable terminal and providing the portable terminal with an information service (see, for example, Patent Document 1). Among the conventional technologies is the one in which a display device (e.g., a plasma display or a liquid crystal display with a built-in touch panel) or the like that displays an advertisement (e.g., an advertisement of a hotel, a restaurant, or the like) reads user information (e.g., an email address) from an ID stored in a portable terminal and transmits the user information to a service providing apparatus, and the service providing apparatus receives the user information, transmits predetermined information (e.g., a room vacancy state of the hotel, a reservation state of the restaurant, or the like) concerning the advertisement displayed on the display device to the portable terminal and provides the portable terminal with the predetermined information.

Patent Document 2 discloses a transaction method for providing goods or service at a vending machine with payment made via a telecommunications network. A user connects to a a payment centre using a portable terminal and receives a transaction code, which the user then enters at the vending machine to receive the required goods or service. Thus, the user is required to enter manually the provided code.

Patent Document 3 disclose a vending machine which is remotely operable by a user via a terminal to order a product. The vending machine transmits an ordering screen to the terminal, receives back ordering information and generates identification information such as a bar code, which is both stored locally and transmitted to the terminal. The user enters the identification information, for example via a bar code reader of the vending machine, and this is matched with the locally-stored identification information to enable dispensing of the ordered product.

Patent Document 4 discloses a method of connecting a user terminal to a internet website, in which an IC card of the terminal stores a URL of the website. Insertion of the IC card is detected and the stored URL is read, allowing the terminal to be automatically connected to the website.
Patent Document 1: Japanese Patent Application Laid-open No. 2005-11007
Patent Document 2: DE 101 19 808 A1
Patent Document 3: US 2003/158624 A1
Patent Document 4: WO 01/80049 A1

### DISCLOSURE OF INVENTION

### PROBLEM TO BE SOLVED BY THE INVENTION

However, the conventional technology described above has a problem in that, for example, troublesome operation is required on the part of the user. In Patent Document 1 for example, the user is required to make an inquiry through a telephone call to a facility (e.g., the hotel or the restaurant) that places the advertisement on the display device (e.g., a plasma display or a liquid crystal display with a built-in touch panel) or the like. In other words, in the conventional technology, the service providing apparatus simply provides a portable terminal owned by a user with information concerning the advertisement. Therefore, when the user desires to make an inquiry through a telephone call to a facility that places the advertisement, the user needs to input a telephone number of the facility which is troublesome for the user.

Therefore, the present invention has been achieved to solve the problems in the conventional technology and it is an object of the present invention to provide a connecting apparatus, a connecting method, and a connecting program that can cause a user to perform procedures such as reservation through a telephone call at a predetermined facility without troublesome operation.

### MEANS FOR SOLVING PROBLEM

According to an aspect of the present invention, a connecting apparatus for establishing a connection from a portable terminal includes: a selection-receiving unit that receives input to select a connection destination of the portable terminal from a user of the portable terminal; a terminal-information reading unit that, when the selection-receiving unit receives input to select the connection destination, reads terminal information stored in the portable terminal from the portable terminal; and a connecting unit that connects the portable terminal and the connection destination selected through the selection-receiving unit based on the terminal information read by the terminal-information reading unit.

The connecting apparatus may further include a connection-destination display unit that displays a plurality of connection destinations connectable by the connecting unit to the portable terminal together with advertisement for the connection destinations, wherein the selection-receiving unit receives input to select a connection destination of the portable terminal from the connection destinations displayed by the connection-destination display unit.

The selection-receiving unit may receive input to select the connection destination when the portable terminal is brought close to a reader unit with respect to a connection destination displayed by the connection-destination display unit, and the user-information reading unit may read the terminal information when the portable terminal is brought close to the reader unit with respect to the connection destination displayed by the connection-destination display unit.

The connecting apparatus may further include: a user-information reading unit that reads user information stored in the portable terminal; and a transmitting unit that transmits the user information read by the user-information reading unit to the connection destination connected by the connecting unit.

The connecting apparatus may further include a connection-destination selecting unit that selects, when the selection-receiving unit receives input selecting a connection destination having a plurality of candidates, one of the candidate as a connection destination based on the user information read by the user-information reading unit, wherein the connecting unit connects the portable terminal and the connection destination selected by the connection-destination selecting unit.

The transmitting unit may transmit reservation information indicating a request for a reservation for a facility at the connection destination together with the user information.

The connecting apparatus may further include an input receiving unit that receives input of predetermined information from the user, wherein the transmitting unit transmits the information, input of which is received from the user by the input receiving unit, to the connection destination.

The connection-destination display unit may further display reception availability information indicating whether a facility at the connection destination is available for the user.

The connection-destination display unit may display only a connection destination of a facility which is available for the user together with advertisement for the connection destination.

The connecting apparatus may further include an updating unit that updates, when notified of a change in the reception availability information by the facility at the connection destination, the reception availability information displayed by the connection-destination display unit.

According to another aspect of the present invention, a connecting method for establishing a connection from a portable terminal includes: receiving input to select a connection destination of the portable terminal from a user of the portable terminal; reading, upon receiving input to select the connection destination at the receiving, terminal information stored in the portable terminal from the portable terminal; and connecting the portable terminal and the connection destination selected at the receiving based on the terminal information read at the reading.

According to still another aspect of the present invention, a computer program causes a computer to implement the above method. The computer program may be stored on a computer-readable recording medium.

### EFFECT OF THE INVENTION

According to an aspect of the present invention, it is possible to establish a telephone connection to a predetermined facility (e.g., a hotel or a restaurant) selected as a connection destination by the user of the portable terminal without user input of a telephone number of the facility. Thus, the user can perform procedures such as reservation through a telephone call at the predetermined facility without troublesome operation.

By displaying a plurality of predetermined facilities (e.g., hotels, restaurant, or the like) as connection destinations together with advertisements concerning the facilities, it is possible to notify the user of a plurality of facilities that provide beneficial information as advertisement. Thus, the user can perform procedures such as reservation through a telephone call at a facility matching the need of the user.

According to another aspect of the present invention, the user can perform procedures from selection of a connection destination to a telephone call using his portable terminal with simple operation (e.g., operation of holding the cellular phone over a reading unit associated with a predetermined facility as a connection destination provided in a plasma display or the like). Thus, the user can perform procedures such as reservation through a telephone call at the predetermined facility without troublesome operation.

According to still another aspect of the present invention, the user can perform procedures such as reservation through a telephone call without troublesome operation of transmitting user information (e.g., information related to the user, such as name, contact information, nationality, address, and the like of the user) in an inquiry to a facility such as a restaurant or a hotel.

According to still another aspect of the present invention, the user can perform procedures such as reservation through a telephone call at a predetermined facility without troublesome operation. For example, nationality of a user is identified based on user information and, when a Japanese makes a telephone call to a hotel in a foreign country, a Japanese operator or a translation service is automatically selected as a connection destination.

According to still another aspect of the present invention, a facility such as a restaurant or a hotel that receives reservation information together with user information can be notified that the reservation information is a request for reservation. As a result, the user can perform procedures such as reservation through a telephone call.

In, for example, a reservation for a facility such as a restaurant or a hotel, by receiving input as to the number of people and transmitting it to the facility, the facility is notified of the number of people in advance. Thus, the user can efficiently perform procedures such as reservation through a telephone call.

According to still another aspect of the present invention, it is possible to display information indicating, for example, that a telephone line is currently busy in a facility such as a restaurant or a hotel, or the facility is fully reserved. Thus, the user can perform procedures such as reservation through a telephone call without the wasted effort of, for example, making a call failing to get through or making a call to a facility that is fully reserved.

According to still another aspect of the present invention, the user can select from the beginning a facility in which procedures such as reservation is available. Thus, the user can efficiently perform procedures such as reservation through a telephone call at a facility matching the need of the user.

According to still another aspect of the present invention, it is possible to always display the latest information concerning a facility such as a restaurant or a hotel for which procedures such as reservation through a telephone call can be performed. Thus, the user can efficiently perform procedures such as reservation through a telephone call without troublesome operation.

### BRIEF DESCRIPTION OF DRAWINGS

[Fig. 1] Fig. 1 is a diagram for explaining an overview of a large-screen display apparatus according to a first embodiment.
[Fig. 2] Fig. 2 is a block diagram of a configuration of the large-screen display apparatus according to the first embodiment.
[Fig. 3] Fig. 3 is a flowchart of display processing by the large-screen display apparatus according to the first embodiment.
[Fig. 4] Fig. 4 is a flowchart of display processing by the large-screen display apparatus according to the first embodiment.
[Fig. 5] Fig. 5 is a flowchart of display processing by the large-screen display apparatus according to the first embodiment.
[Fig. 6] Fig. 6 is a flowchart of telephone connection processing by the large-screen display apparatus according to the first embodiment.
[Fig. 7] Fig. 7 is a diagram of an example of the structure of a hotel contact table.
[Fig. 8] Fig. 8 is a flowchart of telephone connection processing by the large-screen display apparatus according to the first embodiment.
[Fig. 9] Fig. 9 is a diagram of an example of the structure of a hotel contact table.
[Fig. 10] Fig. 10 is a flowchart of connection processing for an IC card portable terminal by the large-screen display apparatus according to the first embodiment.
[Fig. 11] Fig. 11 is a flowchart of user information transmission processing by the large-screen display apparatus according to the first embodiment.
[Fig. 12] Fig. 12 is a flowchart of user information transmission processing by the large-screen display apparatus according to the first embodiment.
[Fig. 13] Fig. 13 is a flowchart of user information transmission processing by the large-screen display apparatus according to the first embodiment.
[Fig. 14] Fig. 14 is a diagram of an example of screen display of user information.
[Fig. 15] Fig. 15 is a flowchart of user information transmission processing by the large-screen display apparatus according to the first embodiment.
[Fig. 16] Fig. 16 is a diagram of an example of screen display of user information.
[Fig. 17] Fig. 17 is a diagram of a computer that executes a connecting program.

### EXPLANATIONS OF LETTERS OR NUMERALS

- 10: IC card portable terminal
- 20: hotel reception system
- 30: large-screen display apparatus
- 31: display unit
- 31a: advertisement display unit
- 31b: menu display unit
- 32: storage unit
- 32a: terminal-information storage unit
- 32b: user-information storage unit
- 33: control unit
- 33a: IC card reader unit
- 33b: radio communication unit
- 33c: telephone-connection control unit
- 40: computer
- 41: display unit
- 42: HDD (Hard disk drive)
- 43: RAM (Random access memory)
- 44: ROM (Read only memory)
- 45: CPU (Central processing unit)
- 50: bus

### BEST MODE(S) FOR CARRYING OUT THE INVENTION

Embodiments of a connecting apparatus, a connecting method, and a connecting program according to the present invention are explained in detail below with reference to the accompanying drawings. The connecting apparatus according to the present invention applied to a large-screen display apparatus (e.g., a plasma display or a liquid crystal display with a built-in touch panel) is explained below as a first embodiment. Then, other embodiments of the present invention are explained.

### First Embodiment

In the first embodiment explained below, the overview and features of a large-screen display apparatus according to the first embodiment and a configuration of and processing by the large-screen display apparatus are explained in order. Lastly, the effect of the first embodiment is explained.

### [An overview and features of the large-screen display apparatus (first embodiment)]

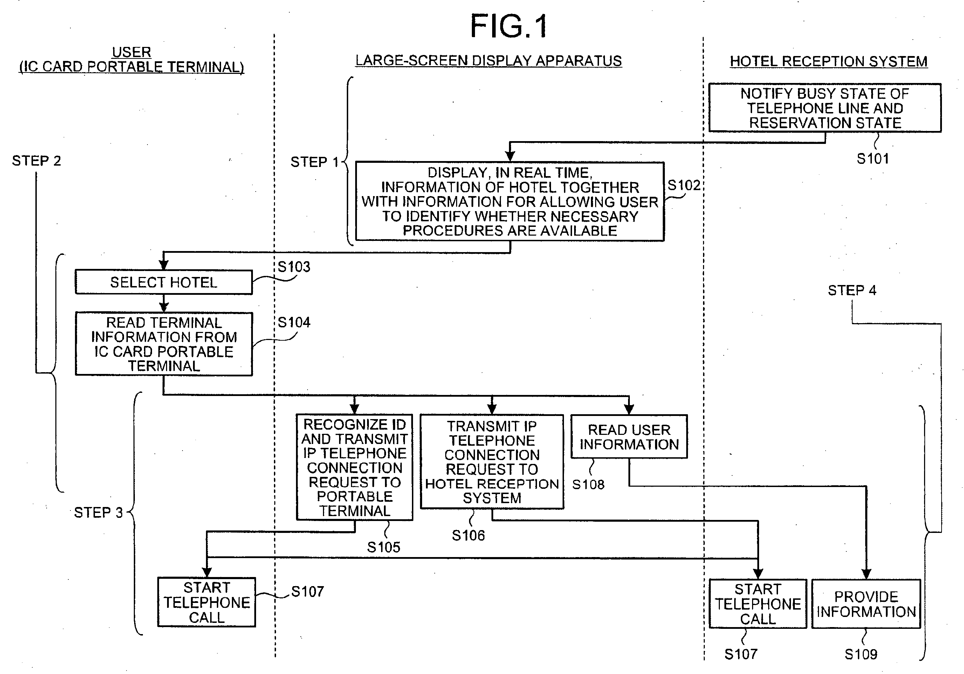

First, the overview and features of the large-screen display apparatus according to the first embodiment is explained with reference to Fig. 1. Described below as the overview is a flow of processing among an IC card that stores terminal information (e.g., an ID such as user telephone number information) for uniquely identifying a terminal and a portable terminal (e.g., cellular phone, PHS, or PDA) having a call function, a large-screen display apparatus, and a hotel reception system. Fig. 1 is a diagram for explaining an overview of the large-screen display apparatus according to the first embodiment. As the overview, the large-screen display apparatus according to the first embodiment is connected to the portable terminal. The large-screen display apparatus has a salient feature in causing a user to make an inquiry by a telephone call to a predetermined facility without troublesome operation.

This feature is specifically described below. As illustrated in Fig. 1, the large-screen display apparatus receives notification of a busy state of a telephone line, a reservation state, and the like from the hotel reception system (Step S101). The large-screen display apparatus according to the first embodiment displays, in real time, advertisement information (e.g., location and accommodation charge) together with information (e.g., "off-reception hour display", "full reservation display", and "telephone busy display") for allowing the user to identify whether necessary procedures (e.g., hotel reservation) are available (Step S102).

Subsequently, a user of the IC card portable terminal provides input (through, for example, a touch panel) to select one of a plurality of hotels displayed, and the large-screen display apparatus receives of the input (Step S103). When the portable terminal is held over a predetermined reader unit (e.g., an IC card reader unit) by the user of the IC card portable terminal, the large-screen display apparatus reads terminal information from an IC card included in the IC card portable terminal (Step S104).

The large-screen display apparatus recognizes an ID (e.g., user telephone number information) from the read terminal information and transmits a telephone connection request to the IC card portable terminal corresponding to the ID (Step S105). Specifically, first, the large-screen display apparatus performs IP connection after establishing wireless LAN connection with the IC card portable terminal and transmits an IP telephone connection request. The large-screen display apparatus also transmits the IP telephone connection request to a hotel reception system of the hotel selected by the user of the IC card portable terminal (Step S106). The large-screen display apparatus connects, through the IP telephone, the user and the hotel reception system according to call control by a third party (3PCC: 3rd Party Call Control). Consequently, a telephone call by a VoIP (Voice over Internet Protocol) starts between the user and the reception of the hotel (Step S107).

The large-screen display apparatus reads user information (e.g., information related to the user such as a name, contact, nationality, and an address) store in the IC card portable terminal held over the predetermined reader unit (Step S108). The large-screen display apparatus transmits the read user information to the hotel reception system and provides the hotel reception system with the user information (Step S109).

Consequently, as indicated by the salient feature described above, the large-screen display apparatus can cause the user to make an inquiry by a telephone call to a predetermined facility without troublesome operation.

### [A configuration of the large-screen display apparatus (first embodiment)]

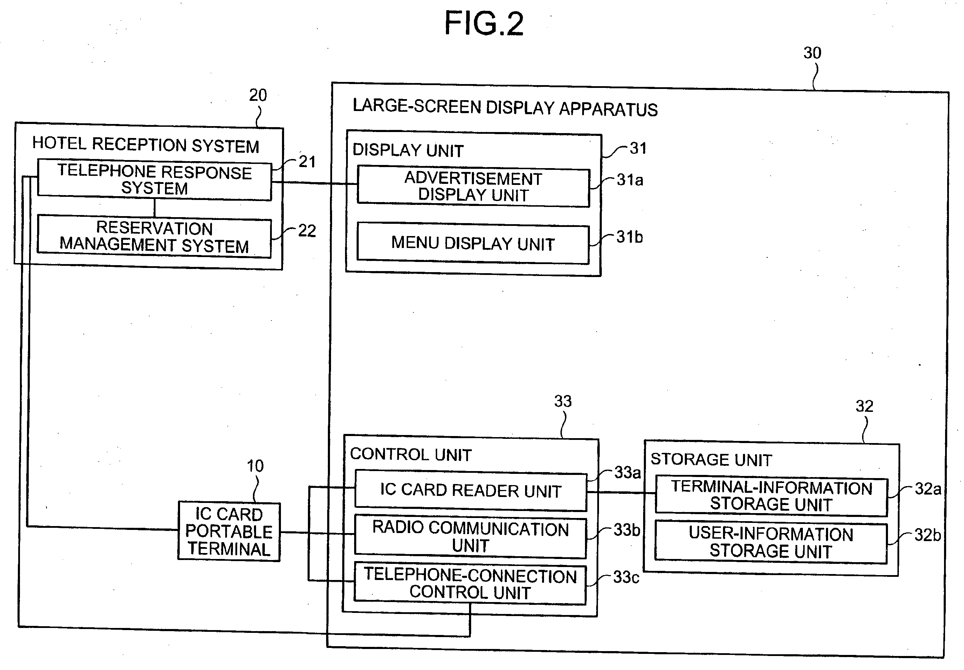

A configuration of the large-screen display apparatus according to the first embodiment is explained with reference to Fig. 2. Fig. 2 is a block diagram of the configuration of the large-screen display apparatus according to the first embodiment. As illustrated in Fig. 2, a large-screen display apparatus 30 receives communication by a wireless LAN from an IC card portable terminal 10 and receives communication by a network from a hotel reception system 20. The large-screen display apparatus 30 includes a display unit 31, a storage unit 32, and a control unit 33. Fig. 2 depicts only processing units necessary for realizing the large-screen display apparatus. Description of other processing units is omitted.

The display unit 31 is display means for displaying predetermined information. As units closely related to the present invention, the display unit 31 includes an advertisement display unit 31a and a menu display unit 31b.

The advertisement display unit 31a is display means for displaying, for example, advertisement information concerning facilities such as hotels. Specifically, the advertisement display unit 31a receives notification (e.g., telephone busy state and room reservation state) from a telephone response system 21 of the hotel reception system 20 and displays, for each of the facilities, whether reservation communication is possible together with advertisement information such as room charges and locations.

Rather than simply displaying, for each of the facilities, information concerning whether reservation communication is possible, the advertisement display unit 31a can generate a list indicating facilities with which reservation communication is possible and display the list from the beginning (e.g., arrange the facilities according to a predetermined rule and a specific algorithm and display the facilities). When latest information is received from the telephone response system 21 of the hotel reception system 20, the advertisement display unit 31a updates the displayed information and displays the latest information in real time.

A touch panel is arranged in the advertisement display unit 31a. For example, the advertisement display unit 31a receives input to select a hotel from a user of the IC card portable terminal 10 and receives, for example, an input of predetermined information (e.g., the number of people and a reservation data in a reservation of a restaurant or a hotel). The telephone response system 21 of the hotel reception system receives information concerning a reservation state of rooms from the reservation management system 22.

The menu display unit 31b is display means for displaying a menu of advertisements and the like displayed on the advertisement display unit 31a.

The storage unit 32 is storing means (memorizing means) for storing data and programs necessary for various kinds of processing by the control unit 33. In particular, as units closely related to the present invention, the storage unit 32 includes a terminal-information storage unit 32a and a user-information storage unit 32b.

The terminal-information storage unit 32a is means for storing various kinds of information concerning the IC card portable terminal 10. Specifically, the terminal-information storage unit 32a stores terminal information (e.g., ID such as user telephone number information) for uniquely identifying a terminal stored in an IC card included in the IC card portable terminal 10.

The user-information storage unit 32b is means for storing various kinds of information concerning the user of the IC card portable terminal 10. Specifically, the user-information storage unit 32b stores user information (e.g., information such as name, contact information, nationality, and address of the user) stored in the IC card included in the IC card portable terminal.

The control unit 33 is a processing unit that has an internal memory for storing a predetermined control program, a program defining various processing procedures and the like, and required data and executes various kinds of processing using the programs and the data. In particular, units closely related to the present invention, the control unit 33 includes an IC card reader unit 33a, a radio communication unit 33b, and a telephone-connection control unit 33c.

The IC card reader unit 33a is a reading processing unit that reads information stored in the IC card in the IC card portable terminal 10. Specifically, for example, when the IC card reader unit 33a recognizes that the IC card portable terminal 10 is held over an IC card reader provided in association with a displayed hotel advertisement, the IC card reader unit 33a reads terminal information (e.g., user telephone number information that uniquely identifies the terminal) and user information stored in the IC card included in the IC card portable terminal 10. When the IC card portable terminal 10 is held over the IC card reader, the IC card reader unit 33a can regard that the user of the IC card portable terminal 10 has an intension of selection and receive the selection of the hotel. -

IC card readers can be provided in association with a plurality of facilities (e.g., restaurants and hotels) displayed on the display unit 31, respectively. Only one IC card reader can be provided in association with the displayed facilities. Only one IC card reader is provided on condition that a predetermined facility is selected by the user of the IC card portable terminal 10 on the touch panel included in the display unit 31.

The radio communication unit 33b is a processing unit that performs radio communication with the IC card portable terminal 10. Specifically, the radio communication unit 33b writes, referring to terminal information (e.g., user telephone number information that uniquely identifies the terminal) read by the IC card reader unit 33a, information (e.g., an encryption key) necessary for wireless connection and causes the IC card portable terminal 10 to perform wireless LAN setting to thereby establish a wireless LAN and perform radio communication.

The telephone-connection control unit 33c is a processing unit that controls telephone connection between the IC card portable terminal 10 and the hotel reception system 20. Specifically, the telephone-connection control unit 33c holds, for example, contact information associated with the hotel reception system 20 of the hotel displayed on the display unit 31 as a contact table and transmits an IP telephone connection request to the hotel reception system 20 referring to this list. The telephone-connection control unit 33c transmits an IP telephone connection request to the IC card portable terminal 10 after executing IP connection with the IC card portable terminal 10. The telephone-connection control unit 33c connects the IC card portable terminal 10 and the hotel reception system 20 through an IP telephone according to call control by a third party (3PCC: 3rd Party Call Control). Consequently, telephone call by a VoIP (Voice over Internet Protocol) is started between the user of the IC card portable terminal and a reception of the hotel.

When there are a plurality of candidates in the hotel contact table as a connection destination of the hotel reception system 20 (e.g., usual contact information, contact information for foreign visitors, and a desk exclusively for women), the telephone-connection control unit 33c can read, referring to user information read by the IC card reader unit 33a, contact information corresponding to user attributes (e.g., nationality and sex) in the user information (Step S804) and transmit an IP telephone connection request. When a plurality of pieces of contact information correspond to user attributes (e.g., nationality and sex) in the user information (e.g., the user is a female foreign visitor), the telephone-connection control unit 33c can decide priority orders of the pieces of contact information in advance (e.g., the contact information for foreign visitors is given higher priority than the desk exclusively for women), read contact information with a higher priority order, and transmit the IP telephone connection request to the contact information. When the contact information corresponds to none of the user attributes, for example, the telephone-connection control unit 33c can read the usual contact information and transmit the IP telephone contact request to the usual contact information.

Rather than simply transmitting the user information of the IC card portable terminal 10 read by the IC card reader unit 33a to the hotel reception system 20, the telephone-connection control unit 33c can transmit information indicating that the processing concerns reservation for requesting a reservation at the hotel to the hotel reception system 20 in addition to the user information. Alternatively, the telephone-connection control unit 33c can transmit, together with the user information, predetermined information (e.g., the number of people and a reservation date in a reservation of a restaurant or a hotel) received from the touch panel arranged in the display unit 31.

### [Display processing by the large-screen display apparatus (first embodiment)]

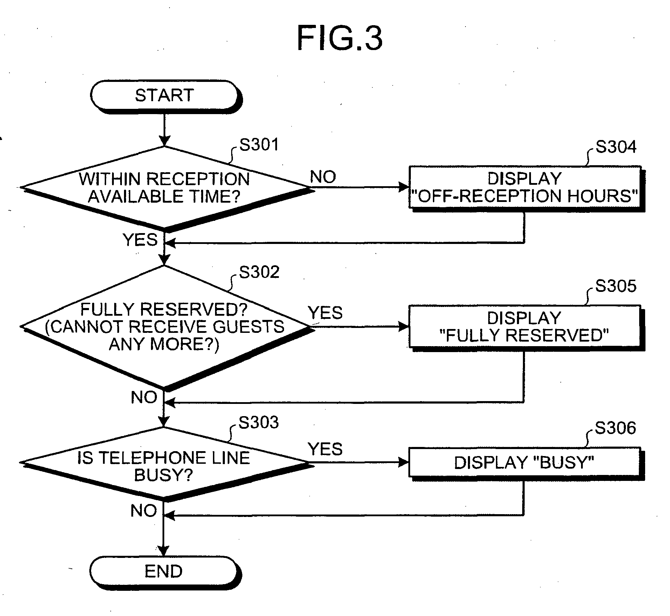

Display processing by the large-screen display apparatus according to the first embodiment illustrated in STEP 1 of Fig. 1 is explained with reference to Figs. 3, 4, and 5. Figs. 3, 4, and 5 are flowcharts of the display processing by the large-screen display apparatus according to the first embodiment.

As illustrated in Fig. 3, on receipt of notification from the hotel reception system 20, the large-screen display apparatus 30 according to the first embodiment checks, from content of the notification, whether it is within the reception available time of the hotel reception system (Step S301). As a result, when it is within the reception available time of the hotel reception system 20 (Yes at Step S301), the large-screen display apparatus 30 checks whether rooms of the hotel are fully reserved (Step S302). As a result, when the rooms are not fully reserved (No at Step S302), the large-screen display apparatus 30 checks whether a telephone line is busy (Step S303). As a result, when the telephone line of the hotel reception system 20 is not busy (No at Step S303), the large-screen display apparatus displays information indicating that reservation reception communication is possible on the advertisement display unit 31a and finishes the display processing.

Returning to the explanation of Step S301, when it is not within the reception available time of the hotel reception system 20 (No at Step S301), the large-screen display apparatus 30 displays "Off-reception hours" on the advertisement display unit 31a (Step S304) and the process proceeds to Step S302. Returning to the explanation of Step S302, when the rooms of the hotel are fully reserved (Yes at Step S302), the large-screen display apparatus 30 displays "Fully reserved" on the advertisement display unit 31a (Step S305) and the process proceeds to Step S303. Returning to the explanation of Step S303, when the telephone line of the hotel reception system 20 is busy (Yes at Step S303), the large-screen display apparatus 30 displays "Busy" on the advertisement display unit 31a (Step S306) and finishes the display processing.

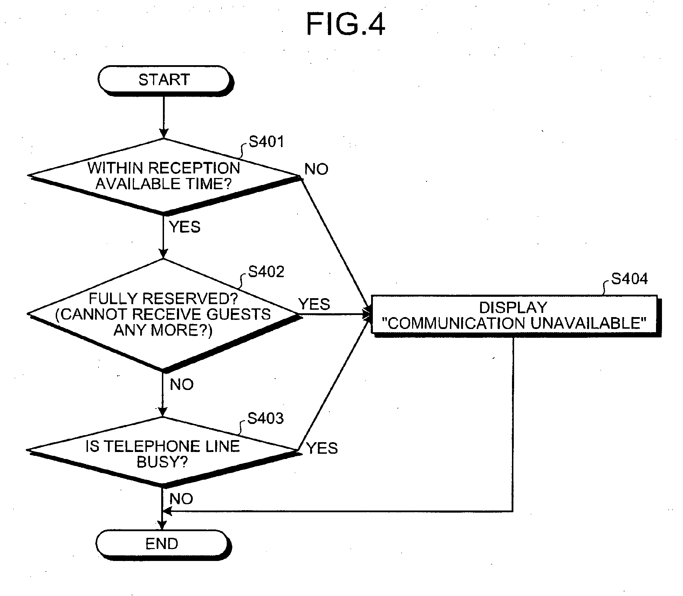

The display processing by the large-screen display apparatus 30 according to the first embodiment illustrated in STEP 1 of Fig. 1 is not limited to the processing of Fig. 3. The processing can be performed as illustrated in Fig. 4. When it is not within the reception available time of the hotel reception system 20 (No at Step S401), when the rooms of the hotel are fully reserved (Yes at Step S402), or when the telephone line of the hotel reception system 20 is busy (Yes at Step S403), the large-screen display apparatus 30 displays "Reservation reception communication unavailable" on the advertisement display unit 31a (Step S404) and finishes the display processing. On the other hand, the case of No at Step S401, Yes at Step S402, and No at Step S403, the large-screen display apparatus displays information indicating that reservation reception communication is possible on the advertisement display unit 31a and finishes the display processing.

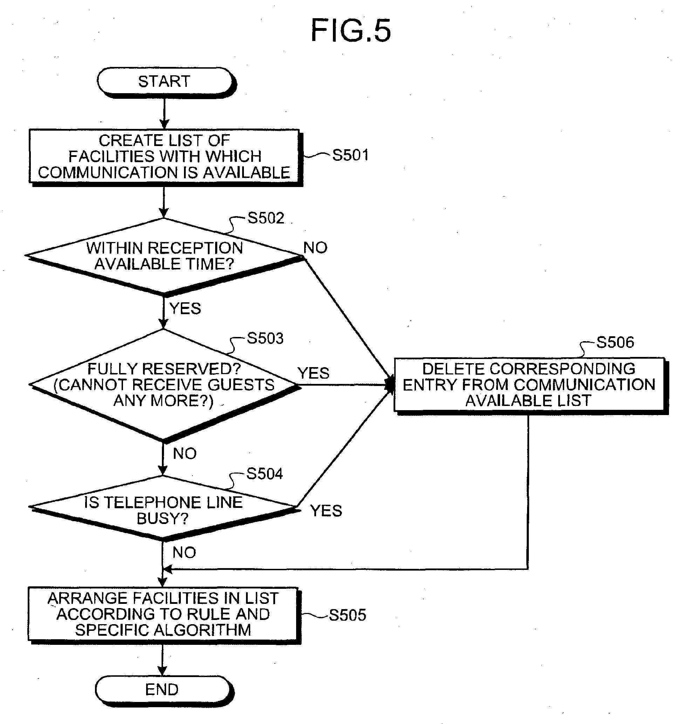

The display processing by the large-screen display apparatus 30 according to the first embodiment illustrated in STEP 1 of Fig. 1 is not limited to the processing of Figs. 3 and 4. The processing can be performed as illustrated in Fig. 5. The large-screen display apparatus 30 creates a list indicating facilities with which reservation communication is available (usually, prepares a list of facilities larger in number than can be displayed on a screen) (Step S501). When it is within the reception available time of the hotel reception system 20 (Yes at Step S502), the rooms of the hotel are not fully reserved (No at Step S503), and the telephone line of the hotel reception system 20 is not busy (No at Step S504), the large-screen display apparatus 30 arranges the facilities in the created list according to a predetermined rule and a specific algorithm and displays the list (Step S505).

On the other hand, in the case of No at Step S502, Yes at Step S503, or Yes at Step S504, the large-screen display apparatus 30 deletes a facility corresponding to this result from the created list (Step S506) and the process proceeds to Step S505.

As described above, when the latest information is received from the hotel reception system 20, the large-screen display apparatus 30 not only always updates the displayed information and displays the latest information on the advertisement display unit 31a. The large-screen display apparatus 30 can update, when the user holds the IC card portable terminal 10 over the reader unit, the displayed information to the latest information with that as a trigger. This reduces the number of times of update of the displayed information and cost of, for example, traffic on the network due to the update.

### [Telephone connection processing by the large-screen display apparatus (first embodiment)]

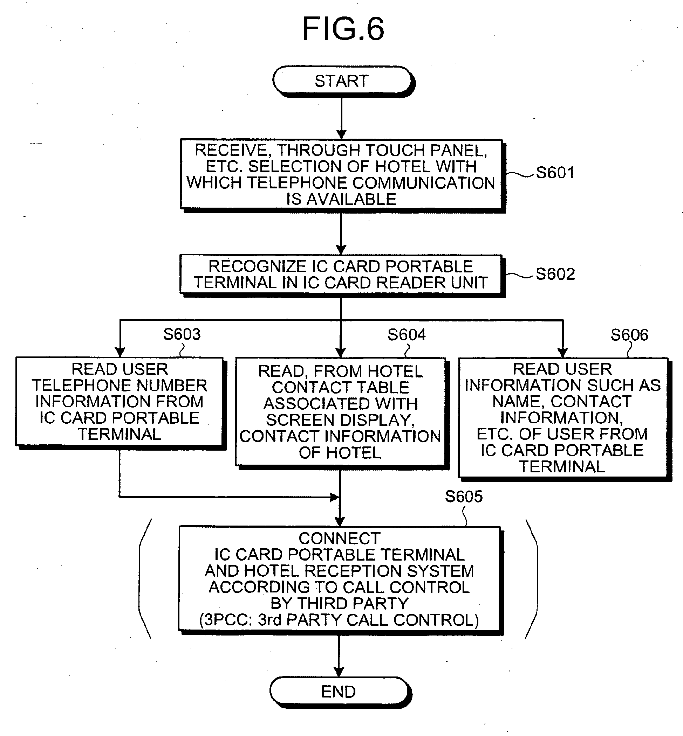

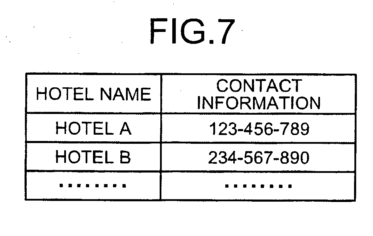

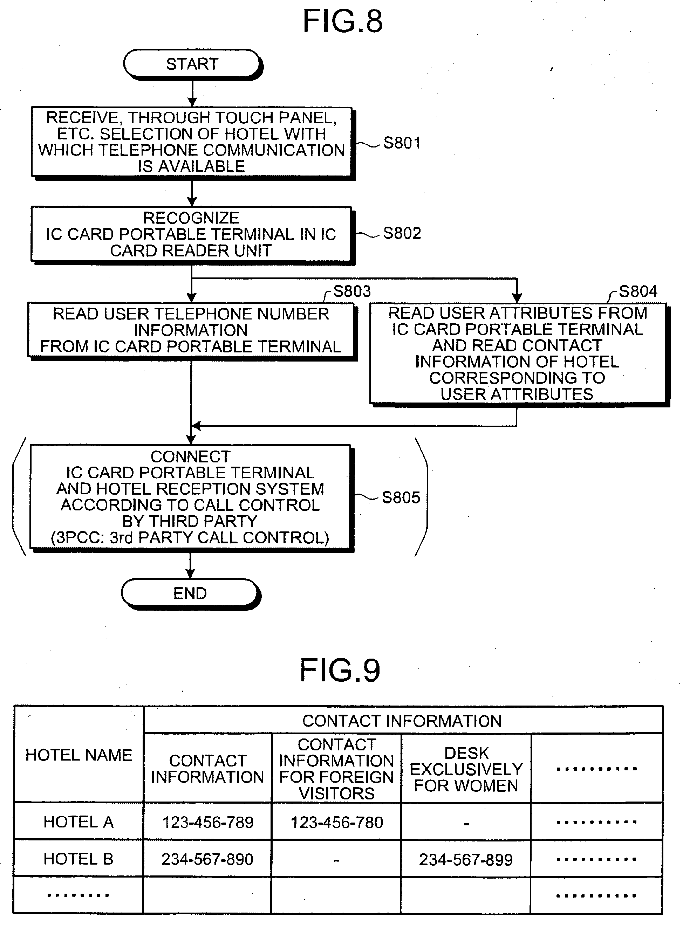

Telephone connection processing by the large-screen display apparatus according to the first embodiment illustrated in STEP 2 of Fig. 1 is explained with reference to Figs. 6, 7, 8, and 9. Figs. 6 and 8 are flowcharts of flows of telephone connection processing by the large-screen display apparatus according to the first embodiment. Figs. 7 and 9 are diagrams of examples of the structure of hotel contact tables.

As illustrated in Fig. 6, the large-screen display apparatus 30 receives input to select a hotel with which reservation communication by phone is available through the touch panel arranged in the display unit 31 (Step S601). The IC card reader unit 33a of the large-screen display apparatus 30 recognizes that the IC card portable terminal 10 is held over an IC card reader corresponding to the hotel, the selection of which is received (Step S602).

Subsequently, the IC card reader unit 33a of the large-screen display apparatus 30 reads user telephone number information from the IC card portable terminal 10 (Step S603). The telephone-connection control unit 33c of the large-screen display apparatus 30 transmits an IP telephone connection request to the IC card portable terminal 10 and reads contact information of the hotel from a hotel contact table (see Fig. 7) associated with screen display (Step S604). The telephone-connection control unit 33c of the large-screen display apparatus 30 transmits the IP telephone connection request to the hotel reception system 20 of the hotel. The telephone-connection control unit 33c of the large-screen display apparatus 30 connects the IC card portable terminal 10 and the hotel reception system 20 through an IP telephone (Step S605).

The IC card reader unit 33a reads user information (e.g., name and contact information of the user) stored in the IC card portable terminal 10 (Step S606).

The telephone connection processing by the large-screen display apparatus according to the first embodiment illustrated in STEP 2 of Fig. 1 is not limited to the processing of Fig. 6. The processing can be performed as illustrated in Fig. 8. Step S801, Step S802, Step S803, and Step S805 are the same as the Steps corresponding thereto of the processing of Fig. 6. However, Step S804 is different from the Step corresponding thereto.

When there are a plurality of candidates in a hotel contact table as a connection destination of the hotel reception system 20 (e.g., usual contact information, contact information for foreign visitors, and a desk exclusively for women: see Fig. 9), the telephone-connection control unit 33c of the large-screen display apparatus 30 can read, referring to the user information read by the IC card reader unit 33a, contact information corresponding to user attributes (e.g., nationality and sex) in the user information (Step S804) and transmit an IP telephone connection request to the contact information.

When a plurality of pieces of contact information correspond to user attributes (e.g., nationality and sex) in the user information (e.g., the user is a female foreign visitor), the telephone-connection control unit 33c can decide priority orders of the pieces of the contact information in advance (e.g., the contact information for foreign visitors is given higher priority than the desk exclusively for women), read contact information with a higher priority order, and transmit the IP telephone connection request to the contact information. When the contact information corresponds to none of the user attributes, for example, the telephone-connection control unit 33c can read the usual contact information and transmit the IP telephone contact request to the usual contact information.

### [Connection processing for the IC card portable terminal (first embodiment)]

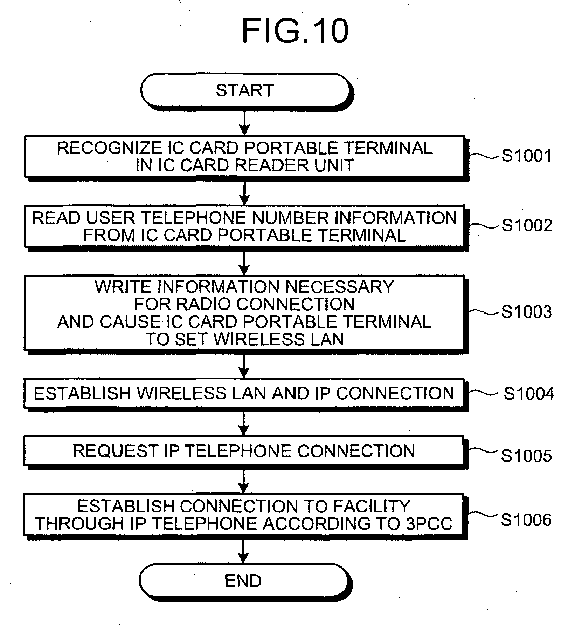

Connection processing for the IC card portable terminal by the large-screen display apparatus according to the first embodiment illustrated in STEP 3 of Fig. 1 is explained with reference to Fig. 10. Fig. 10 is a flowchart of the connection processing for the IC card terminal apparatus by the large-screen display apparatus according to the first embodiment.

As illustrated in Fig. 10, the IC card reader unit 33a of the large-screen display apparatus 30 recognizes that the IC card portable terminal 10 is held over an IC card reader corresponding to a hotel, selection of which is received (Step S1001). The IC card reader unit 33a reads user telephone number information from the IC card portable terminal 10 (Step S1002).

Subsequently, the radio communication unit 33b of the large-screen display apparatus 30 writes information necessary for wireless connection (e.g., an encryption key) referring to the user telephone number information read by the IC card reader unit 33a and causes the IC card portable terminal 10 to perform wireless LAN setting (Step S1003). After establishing wireless connection in the radio communication unit 33b, the telephone-connection control unit 33c establishes IP connection with the IC card portable terminal 10 (Step S1004). The telephone-connection control unit 33c transmits an IP telephone connection request to the IC card portable terminal 10 (Step S1005). The telephone-connection control unit 33c establishes connection to a facility selected by the user of the IC card portable terminal through an IP telephone according to 3PCC (Step S1006).

The telephone-connection control unit 33c can transmit a telephone number of the facility to the IC card portable terminal 10 such that the user of the IC card portable terminal 10 directly makes contact with the facility by phone. For example, When the IC card portable terminal 10 is held over the IC card reader, a telephone number of the facility is displayed on a screen included in the IC card portable terminal 10. When the user depresses a call button or the like, the IC card portable terminal 10 is connected by phone.

### [User information transmission processing by the large-screen display apparatus (first embodiment)]

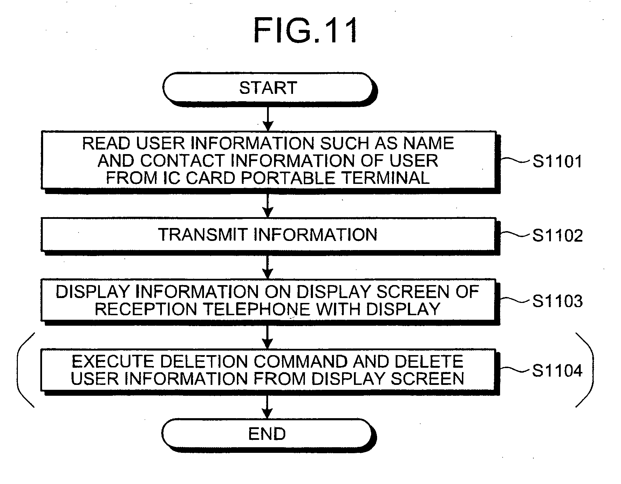

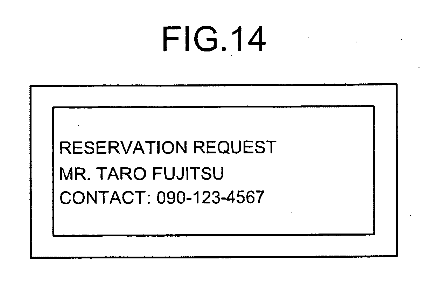

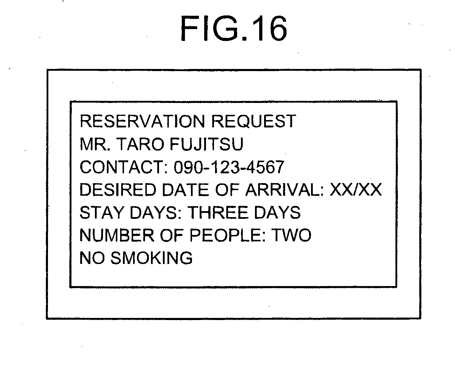

User information transmission processing by the large-screen display apparatus according to the first embodiment illustrated in STEP 4 of Fig. 1 is explained with reference to Figs. 11 to 16. Figs. 11 to 13 and Fig. 15 are flowcharts of user information transmission processing by the large screen display apparatus according to the first embodiment. Figs. 14 and 16 are diagrams of example of screen display of user information.

As illustrated in Fig. 11, the IC card reader unit 33a of the large-screen display apparatus 30 reads user information (e.g., information such as name, contact information, nationality, and address of the user) (Step S1101). The telephone-connection control unit 33c transmits the user information to the hotel reception system 20 (Step S1102) and causes the hotel reception system 20 to display the user information on, for example, a display screen of a telephone with display included in the hotel reception system 20 (Step S1103: see Fig. 14). The large-screen display apparatus 30 can execute a deletion command for the user information displayed on the display screen of the telephone with display included in the hotel reception system 20 and delete the user information from the display screen (Step S1104).

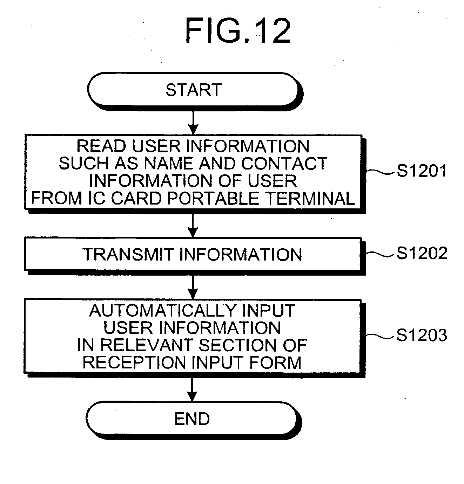

The user information transmission processing by the large-screen display apparatus according to the first embodiment illustrated in STEP 4 of Fig. 1 is not limited to the processing of Fig. 11. The processing can be performed as illustrated in Fig. 12. Step S1201 and Step S1202 are the same as the Steps corresponding thereto in Fig. 11. However, Step S1203 is different from the Step corresponding thereto. The telephone-connection control unit 33c transmits the user information to the hotel reception system 20 (Step S1102) and causes the hotel reception system 20 to automatically input the user information in, for example, a reception input form provided to the hotel reception system 20 (Step S1203).

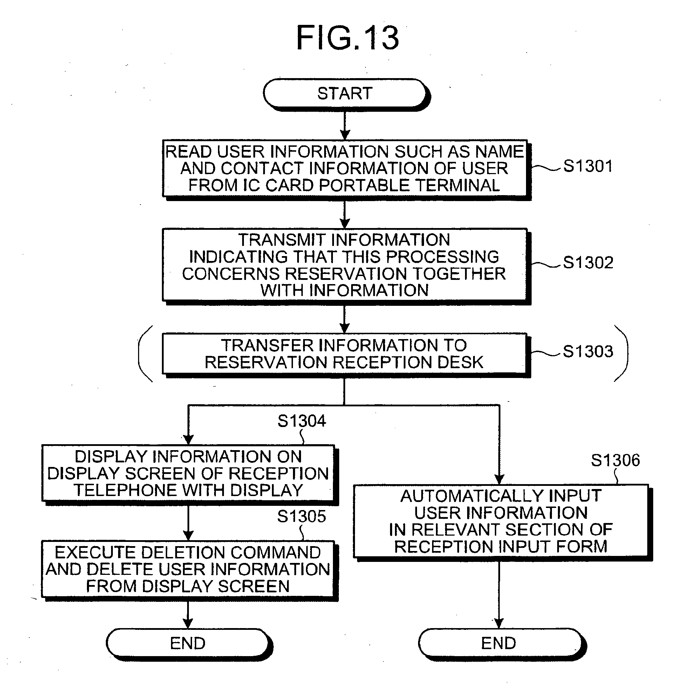

The user information transmission processing by the large-screen display apparatus according to the first embodiment illustrated in STEP 4 of Fig. 1 is not limited to the processing of Figs. 11 and 12. The processing can be performed as illustrated in Fig. 13. Steps S1301 and Steps S1304 to S1306 are the same as the Steps corresponding thereto in Figs. 11 and 12. However, Steps S1302 and S1303 are different from the Steps corresponding thereto. The telephone-connection control unit 33c transmits information indicating that the processing concerns reservation for requesting a reservation at the hotel to the hotel reception system 20 in addition to the user information (Step S1302) and causes the hotel reception system to transfer the information to a reservation reception desk of the hotel reception system 20 (Step S1303). The telephone-connection control unit 33c can search, based on the user information, a database or the like managed on the facility side and transfer the user information to a related desk in the facility. For example, a call to a hospital from a user who is patient in internal medicine is transferred to the internal medicine department.

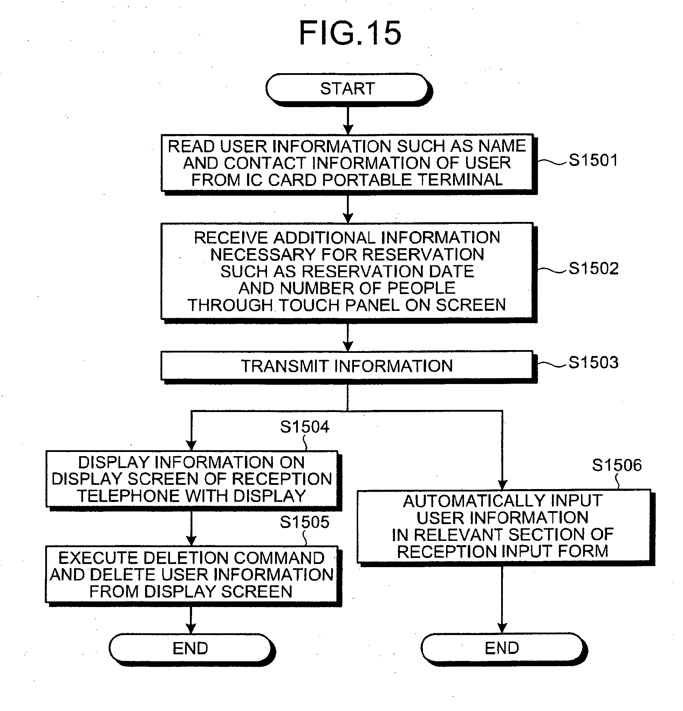

The user information transmission processing by the large-screen display apparatus according to the first embodiment illustrated in STEP 4 of Fig. 1 is not limited to the processing of Figs. 11 to 13. The processing can be performed as illustrated in Fig. 15. Step S1501 and Steps S1504 to S1506 are the same as the Steps corresponding thereto in Figs. 11 to 13. However, Steps S1502 and S1503 are different from the Steps corresponding thereto. The large-screen display apparatus 30 receives additional information (e.g., the number of people and the date of reservation for a reservation at a hotel) through the touch panel of the display unit 31 (Step S1502). The telephone-connection control unit 33c transmits the additional information to the hotel reception system 20 together with the user information (Step S1503). For example, as illustrated in Fig. 16, the telephone-connection control unit 33c causes the hotel reception system 20 to display the additional information on a display of a telephone with display included in the hotel reception system 20.

### [Effect of the first embodiment]

As described above, according to the first embodiment, the large-screen display apparatus receives input to select a connection destination (e.g., a connection destination to a facility such as a hotel or a restaurant) of the portable terminal from the user, reads the terminal information stored in the portable terminal, and connects the portable terminal and the connection destination selected by the user using the terminal information. Therefore, for example, it is possible to establish a telephone connection to a predetermined facility (e.g., a hotel or a restaurant) selected as a connection destination by the user of the portable terminal without user input of a telephone number of the facility. Thus, the user can perform procedures such as reservation through a telephone call at the predetermined facility without troublesome operation.

According to the first embodiment, the large-screen display apparatus displays a plurality of connection destinations, which can be connected to the portable terminal, on a plasma display, a liquid crystal display, or the like with a built-in touch panel together with advertisement concerning the connection destinations and receives input to select a connection destination of the portable terminal from the displayed connection destinations. By displaying a plurality of predetermined facilities (e.g., hotels, restaurant, or the like) together with advertisements concerning the facilities, it is possible to notify the user of a plurality of facilities that provide beneficial information as advertisement. Thus, the user can perform procedures such as reservation through a telephone call at a facility matching the need of the user.

According to the first embodiment, the large-screen display apparatus receives input to select a connection destination when the portable terminal is brought close to the displayed connection destination and reads terminal information when the portable terminal is brought close to the displayed connection destination. Therefore, the user can perform procedures from selection of a connection destination to a telephone call using his portable terminal with simple operation (e.g., operation of holding the cellular phone over a reading unit associated with a predetermined facility as a connection destination provided in a plasma display or the like). Thus, the user can perform procedures such as reservation through a telephone call at the predetermined facility without troublesome operation.

According to the first embodiment, the large-screen display apparatus reads user information stored in the portable terminal and transmits the read user information to the connection destination. Therefore, the user can perform procedures such as reservation through a telephone call without troublesome operation of transmitting user information (e.g., information related to the user, such as name, contact information, nationality, address, and the like of the user) in an inquiry to a facility such as a restaurant or a hotel.

According to the first embodiment, upon receiving input selecting a connection destination having a plurality of candidates from the user, the large-screen display apparatus selects one of the candidates as a connection destination based on read user information and connects the connection destination to the portable terminal. Therefore, the user can perform procedures such as reservation through a telephone call at a predetermined facility without troublesome operation. For example, nationality of a user is identified based on user information and, when a Japanese makes a telephone call to a hotel in a foreign country, a Japanese operator or a translation service is automatically selected as a connection destination.

According to the first embodiment, the large-screen display apparatus transmits reservation information indicating a request for a reservation for a facility at a connection destination together with user information. Therefore, a facility such as a restaurant or a hotel that receives reservation information together with user information can be notified that the reservation information is a request for a reservation. As a result, the user can perform procedures such as reservation through a telephone call.

According to the first embodiment, the large-screen display apparatus receives input of predetermined information from the user of the portable terminal and transmits the input information to a connection destination. For example, in a reservation for a facility such as a restaurant or a hotel, by receiving input as to the number of people and transmitting it to the facility, the facility is notified of the number of people in advance. Thus, the user can efficiently perform procedures such as reservation through a telephone call.

According to the first embodiment, the large-screen display apparatus further displays reception availability information indicating whether a facility at a connection destination is available for the user of the portable terminal. Therefore, it is possible to display information indicating, for example, that a telephone line is currently busy in a facility such as a restaurant or a hotel, or the facility is fully reserved. Thus, the user can perform procedures such as reservation through a telephone call without the wasted effort of, for example, making a call failing to get through or making a call to a facility that is fully reserved.

According to the first embodiment, when notified of a change in the reception availability information by the facility at the connection destination, the large-screen display apparatus updates the displayed reception availability information. Therefore, it is possible to always display the latest information concerning a facility such as a restaurant or a hotel for which procedures such as reservation through a telephone call can be performed. Thus, the user can efficiently perform procedures such as reservation through a telephone call without troublesome operation.

The first embodiment is not only advantages for the user as described above, but also for the facility or the like that receive a reservation or the like from the user in that it is possible to reduce receiving unnecessary calls and save labor and time for obtaining information concerning a reservation from the user.

### Second Embodiment

Although a particular embodiment of the present invention has been described above, the present invention is not limited thereto, but is susceptible to numerous changes and modifications. Described below is other embodiments of the present invention.

### (1) Apparatus configuration, etc.

Of the processes described in the first embodiment, all or part of the processes explained as being performed automatically can be performed manually. Similarly, all or part of the processes explained as being performed manually can be performed automatically by a known method. The processing procedures, the control procedures, specific names, and information including various data and parameters described above and illustrated in the drawings can be changed as required unless otherwise specified.

The constituent elements of the large-screen display apparatus 30 in Fig. 2 are functionally conceptual, and need not be physically configured as illustrated. In other words, a specific form of the large-screen display apparatus 30 is not limited to that illustrated in Fig. 2, and the constituent elements, as a whole or in part, can be divided or integrated either functionally or physically based on various types of loads or use conditions. For example, the telephone-connection control unit 33c is divided into a telephone connection control function by 3PCC and a data transmission function for user information and the like. The process functions performed by the large-screen display apparatus 30 can be entirely or partially realized by the CPU or computer programs that are analyzed and executed by the CPU, or realized as hardware by wired logic.

### (2) Connecting program

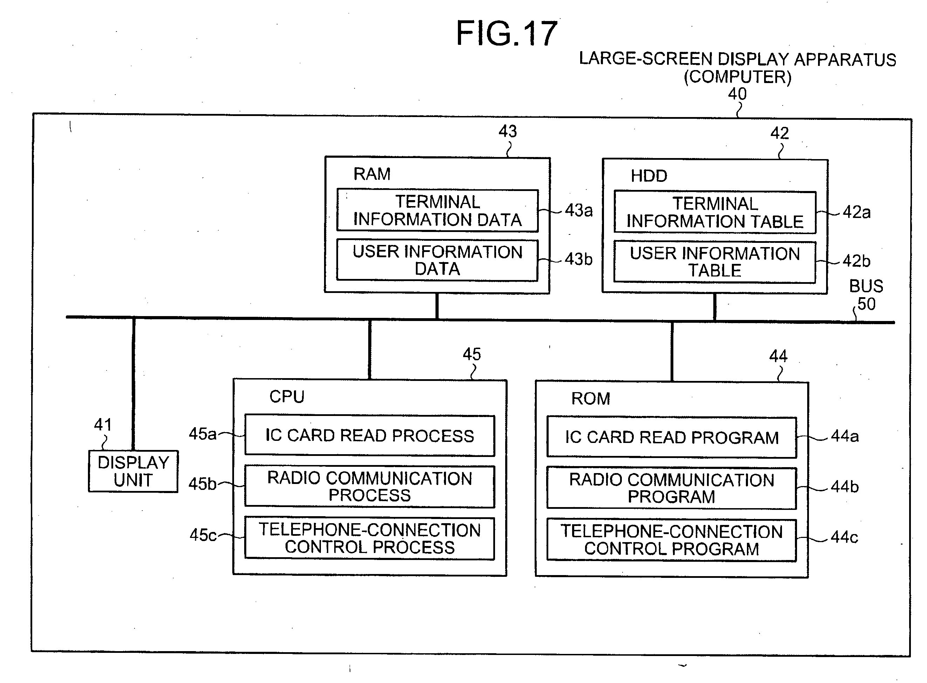

A computer program prepared in advance can be executed on a computer system such as a personal computer or a work station to realize the processes described in the first embodiment. With reference to Fig. 17, an example of a computer is described that executes a connecting program implementing the same function as the connection processing by the large-screen display apparatus 30 explained in the first embodiment. Fig. 17 is a diagram of a computer that executes the connecting program.

As illustrated in Fig. 17, a computer 40 as a large-screen display apparatus includes a display unit 41, an HDD 42, a RAM 43, a ROM 44, and a CPU 45, which are connected through a predetermined bus 50. The display unit 41 corresponds to the display unit 31 of Fig. 2.

In the ROM 44, the connecting program that implements the same functions as the large-screen display apparatus 30 described in the first embodiment, i.e., an IC card read program 44a, a radio communication program 44b, and a telephone-connection control program 44c are stored in advance as illustrated in Fig. 17. The programs 44a, 44b, and 44c can be appropriately integrated or distributed in the same manner as the constituent elements of the large-screen display apparatus 30 in Fig. 2.

When read from the ROM 44 and executed by the CPU 45 as illustrated in Fig. 17, the programs 44a, 44b, and 44c function as an IC card read process 45a, a radio communication process 45b, and a telephone-connection control process 45c, respectively. The processes 45a, 45b, and 45c correspond to the IC card reader unit 33a, the radio communication unit 33b, and the telephone-connection control unit 33c of the large-screen display apparatus 30 in Fig. 2.

The HDD 42 stores, as illustrated in Fig. 17, a terminal information table 42a and a user information table 42b. The terminal information table 42a and the user information table 42b correspond to the terminal-information storage unit 32a and the user-information storage unit 32b of the large-screen display apparatus 30 in Fig. 2, respectively. The CPU 45 reads terminal information data 43a and user information data 43b from the terminal information table 42a and the user information table 42b, respectively, and stores the data in the RAM 43. The CPU 45 executes connection processing based on the terminal information data 43a and the user information data 43b stored in the RAM 43.

The programs 44a, 44b, and 44c do not always have to be stored in the ROM 44 from the beginning. The programs 44a, 44b, and 44c can be stored in, for example, "a portable physical medium" such as a flexible disk (FD), a CD-ROM, an MO disk, a DVD disk, a magneto-optical disk, or an IC card configured to be connected to the computer 40, or "a fixed physical medium" such as an HDD provided on the inside and outside of the computer 40. The programs 44a, 44b, and 44c can also be stored in "another computer (or a server)" connected to the computer 40 via a public line, the Internet, a LAN, a WAN, or the like. The computer 40 can read the programs from such a medium and execute them.

### INDUSTRIAL APPLICABILITY

As described above, the connecting apparatus, the connecting method, and the connecting program according to the present invention are useful in connection to a portable terminal and is, in particular, suitable for making an inquiry to a predetermined facility through a telephone call without causing a user trouble.

## Claims

1. A connecting apparatus (30) for establishing a connection with a portable terminal (10) comprising an IC-card, comprising:
a selection-receiving unit (31a) for receiving input to select a connection destination of the portable terminal (10) from a user of the portable terminal (10);
a terminal-information reading unit (33a) for reading, when the selection-receiving unit (31a) receives input to select the connection destination, terminal information stored in the IC-card of the portable terminal (10) from the portable terminal (10); and
a connecting unit (33c) for connecting the portable terminal (10) and the connection destination selected through the selection-receiving unit (31a) based on the terminal information read by the terminal-information reading unit (33a).

2. The connecting apparatus (30) according to claim 1, further comprising a connection-destination display unit (31a) for displaying a plurality of connection destinations connectable by the connecting unit (33c) to the portable terminal together with advertisement for the connection destinations, wherein
the selection-receiving unit (31a) is arranged to receive input to select a connection destination of the portable terminal (10) from the connection destinations displayed by the connection-destination display unit (31a).

3. The connecting apparatus (30) according to claim 2, wherein
the selection-receiving unit (31a) is arranged to receive input to select the connection destination when the portable terminal (10) is brought close to a reader unit with respect to a connection destination displayed by the connection-destination display unit (31a), and
the terminal-information reading unit (33a) is arranged to read the terminal information when the portable terminal (10) is brought close to the reader unit with respect to the connection destination displayed by the connection-destination display unit (31a).

4. The connecting apparatus (30) according to claim 1, further comprising:
a user-information reading unit (33a) for reading user information stored in the portable terminal (10); and
a transmitting unit (33c) for transmitting the user information read by the user-information reading unit (33a) to the connection destination connected by the connecting unit (33c).

5. The connecting apparatus (30) according to claim 4, further comprising a connection-destination selecting unit (33c) for selecting, when the selection-receiving unit (31a) receives input selecting a connection destination having a plurality of candidates, one of the candidates as a connection destination based on the user information read by the user-information reading unit, wherein
the connecting unit (33c) is arranged to connect the portable terminal (10) and the connection destination selected by the connection-destination selecting unit (33c).

6. The connecting apparatus (30) according to claim 5, wherein the transmitting unit (33c) is arranged to transmit reservation information indicating a request for a reservation for a facility at the connection destination together with the user information.

7. The connecting apparatus (30) according to claim 5, further comprising an input receiving unit (31a) for receiving input of predetermined information from the user, wherein
the transmitting unit (33c) is arranged to transmit the information, input of which is received from the user by the input receiving unit (31a), to the connection destination.

8. The connecting apparatus (30) according to claim 2, wherein the connection-destination display unit (31a) is further arranged to display reception availability information indicating whether a facility at the connection destination is available for the user.

9. The connecting apparatus (30) according to claim 2, wherein the connection-destination display unit (31a) is arranged to display only a connection destination of a facility which is available for the user together with advertisement for the connection destination.

10. The connecting apparatus (30) according to claim 8, further comprising an updating unit (31a) for updating, when notified of a change in the reception availability information by the facility at the connection destination, the reception availability information displayed by the connection-destination display unit (31a).

11. A connecting method for enabling a computer to establish a connection from a portable terminal (10) comprising an IC-card to a connection destination, comprising, by the computer:
receiving input to select a connection destination of the portable terminal from a user of the portable terminal;
reading, by a terminal-information reading unit (33a), upon receiving input to select the connection destination at the receiving, terminal information stored in the IC-card of the portable terminal from the IC-card of the portable terminal; and
connecting the portable terminal and the connection destination selected at the receiving step based on the terminal information read at the reading step.

12. A computer program that causes a computer to perform:
receiving input to select a connection destination of a portable terminal (10) comprising an IC-card from a user of the portable terminal;
reading, by a terminal-information reading unit (33a), upon receiving input to select the connection destination at the receiving, terminal information stored in the IC-card of the portable terminal from the IC-card of the portable terminal; and
connecting the portable terminal and the connection destination selected at the receiving step based on the terminal information read at the reading step.

13. A computer-readable recording medium storing the computer program according to claim 12.

## Patentansprüche

1. Verbindungsvorrichtung (30) zum Herstellen einer Verbindung mit einem tragbaren Endgerät (10), das eine IC-Karte umfasst, wobei die Vorrichtung Folgendes umfasst:
eine Auswahlempfangseinheit (31a) zum Empfangen einer Eingabe zum Auswählen eines Verbindungsziels des tragbaren Endgeräts (10) von einem Benutzer des tragbaren Endgeräts (10);
eine Endgeräteinformationsleseeinheit (33a) zum Lesen von Endgeräteinformationen, die in der IC-Karte des tragbaren Endgeräts (10) gespeichert sind, aus dem tragbaren Endgerät (10), wenn die Auswahlempfangseinheit (31a) eine Eingabe zum Auswählen des Verbindungsziels empfängt; und
eine Verbindungseinheit (33c) zum Verbinden des tragbaren Endgeräts (10) und des Verbindungsziels, das durch die Auswahlempfangseinheit (31a) ausgewählt wurde, auf der Basis der Endgeräteinformationen, die von der Endgeräteinformationsleseeinheit (33a) gelesen wurden.

2. Verbindungsvorrichtung (30) nach Anspruch 1, die weiterhin eine Verbindungszielanzeigeeinheit (31a) zum Anzeigen mehrerer Verbindungsziele, die durch die Verbindungseinheit (33c) mit dem tragbaren Endgerät verbindbar sind, zusammen mit Werbung für die Verbindungsziele, wobei
die Auswahlempfangseinheit (31a) dazu eingerichtet ist, eine Eingabe zum Auswählen eines Verbindungsziels des tragbaren Endgeräts (10) aus den Verbindungszielen, die von der Verbindungszielanzeigeeinheit (31a) angezeigt wurden, zu empfangen.

3. Verbindungsvorrichtung (30) nach Anspruch 2, wobei
die Auswahlempfangseinheit (31a) dazu eingerichtet ist, eine Eingabe zum Auswählen des Verbindungsziels zu empfangen, wenn das tragbare Endgerät (10) in die Nähe einer Lesereinheit mit Bezug auf ein Verbindungsziel, das von der Verbindungszielanzeigeeinheit (31a) angezeigt wurde, gebracht wird, und
die Endgeräteinformationsleseeinheit (33a) dazu eingerichtet ist, die Endgeräteinformationen zu lesen, wenn das tragbare Endgerät (10) in die Nähe der Lesereinheit mit Bezug auf das Verbindungsziel, das von der Verbindungszielanzeigeeinheit (31a) angezeigt wurde, gebracht wird.

4. Verbindungsvorrichtung (30) nach Anspruch 1, die weiterhin Folgendes umfasst:
eine Benutzerinformationsleseeinheit (33a) zum Lesen von Benutzerinformationen, die in dem tragbaren Endgerät (10) gespeichert sind; und
eine Übertragungseinheit (33c) zum Übertragen der Benutzerinformationen, die von der Benutzerinformationsleseeinheit (33a) gelesen wurden, an das Verbindungsziel, das durch die Verbindungseinheit (33c) verbunden wurde.

5. Verbindungsvorrichtung (30) nach Anspruch 4, die weiterhin eine Verbindungszielauswahleinheit (33c) zum Auswählen - wenn die Auswahlempfangseinheit (31a) eine Eingabe, die ein Verbindungsziel auswählt, mit mehreren Kandidaten empfängt - eines der Kandidaten als ein Verbindungsziel auf der Basis der Benutzerinformationen, die von der Benutzerinformationsleseeinheit gelesen wurde, wobei die Verbindungseinheit (33c) dazu eingerichtet ist, das tragbare Endgerät (10) und das Verbindungsziel, das von der Verbindungszielauswahleinheit (33c) ausgewählt wurde, zu verbinden.

6. Verbindungsvorrichtung (30) nach Anspruch 5, wobei die Übertragungseinheit (33c) dazu eingerichtet ist, Reservierungsinformationen, die eine Anforderung einer Reservierung für eine Einrichtung an dem Verbindungsziel anzeigt, zusammen mit den Benutzerinformationen zu übertragen.

7. Verbindungsvorrichtung (30) nach Anspruch 5, die weiterhin eine Eingabeempfangseinheit (31a) zum Empfangen einer Eingabe von vorherbestimmten Informationen von dem Benutzer umfasst, wobei
die Übertragungseinheit (33c) dazu eingerichtet ist, die Informationen, deren Eingabe durch die Eingabeempfangseinheit (31a) von dem Benutzer empfangen wurde, an das Verbindungsziel zu übertragen.

8. Verbindungsvorrichtung (30) nach Anspruch 2, wobei die Verbindungszielanzeigeeinheit (31a) weiterhin dazu eingerichtet ist, Empfangsverfügbarkeitsinformationen anzuzeigen, die anzeigen, ob eine Einrichtung an dem Verbindungsziel für den Benutzer verfügbar ist.

9. Verbindungsvorrichtung (30) nach Anspruch 2, wobei die Verbindungszielanzeigeeinheit (31a) dazu eingerichtet ist, nur ein Verbindungsziel einer Einrichtung, die für den Benutzer verfügbar ist, zusammen mit Werbung für das Verbindungsziel anzuzeigen.

10. Verbindungsvorrichtung (30) nach Anspruch 8, die weiterhin eine Aktualisierungseinheit (31a) zum Aktualisieren - wenn sie über eine Änderung der Empfangsverfügbarkeitsinformationen durch die Einrichtung an dem Verbindungsziel benachrichtigt wird - der Empfangsverfügbarkeitsinformationen, die von der Verbindungszielanzeigeeinheit (31a) angezeigt werden, umfasst.

11. Verbindungsverfahren zum Ermöglichen, dass ein Computer eine Verbindung von einem tragbaren Endgerät (10), das eine IC-Karte umfasst, zu einem Verbindungsziel herstellen kann, wobei das Verfahren Folgendes - durch den Computer - umfasst:
Empfangen einer Eingabe zum Auswählen eines Verbindungsziels des tragbaren Endgeräts von einem Benutzer des tragbaren Endgeräts;
bei Empfangen einer Eingabe zum Auswählen des Verbindungsziels am Empfang Lesen von Endgeräteinformationen, die in der IC-Karte des tragbaren Endgeräts gespeichert sind, aus der IC-Karte des tragbaren Endgeräts durch eine Endgeräteinformationsleseeinheit (33a) und
Verbinden des tragbaren Endgeräts und des Verbindungsziels, das in dem Empfangsschritt ausgewählt wurde, auf der Basis der Endgeräteinformationen, die in dem Empfangsschritt gelesen wurden.

12. Computerprogramm, das bewirkt, dass ein Computer Folgendes durchführt:
Empfangen einer Eingabe zum Auswählen eines Verbindungsziels eines tragbaren Endgeräts (10), das eine IC-Karte umfasst, von einem Benutzer des tragbaren Endgeräts;
bei Empfangen einer Eingabe zum Auswählen des Verbindungsziels am Empfang Lesen von Endgeräteinformationen, die in der IC-Karte des tragbaren Endgeräts gespeichert sind, aus der IC-Karte des tragbaren Endgeräts durch eine Endgeräteinformationsleseeinheit (33a) und
Verbinden des tragbaren Endgeräts und des Verbindungsziels, das in dem Empfangsschritt ausgewählt wurde, auf der Basis der Endgeräteinformationen, die in dem Empfangsschritt gelesen wurden.

13. Computerlesbares Aufzeichnungsmedium, das das Computerprogramm nach Anspruch 12 speichert.

## Revendications

1. Appareil de connexion (30) destiné à établir une connexion avec un terminal portable (10) comprenant une carte de circuit IC, comprenant :
une unité de réception de sélection (31a) destinée à recevoir une entrée visant à sélectionner une destination de connexion du terminal portable (10) en provenance d'un utilisateur du terminal portable (10) ;
une unité de lecture d'informations de terminal (33a) destinée à lire, lorsque l'unité de réception de sélection (31a) reçoit l'entrée visant à sélectionner la destination de connexion, des informations de terminal stockées dans la carte de circuit IC du terminal portable (10), à partir du terminal portable (10) ; et
une unité de connexion (33c) destinée à connecter le terminal portable (10) et la destination de connexion sélectionnée par l'intermédiaire de l'unité de réception de sélection (31a), sur la base des informations de terminal lues par l'unité de lecture d'informations de terminal (33a).

2. Appareil de connexion (30) selon la revendication 1, comprenant en outre une unité d'affichage de destination de connexion (31a) destinée à afficher une pluralité de destinations de connexion pouvant être connectées par l'unité de connexion (33c) au terminal portable, conjointement avec une annonce pour les destinations de connexion, dans lequel :
l'unité de réception de sélection (31a) est agencée de manière à recevoir une entrée visant à sélectionner une destination de connexion du terminal portable (10) parmi les destinations de connexion affichées par l'unité d'affichage de destination de connexion (31a).

3. Appareil de connexion (30) selon la revendication 2, dans lequel :
l'unité de réception de sélection (31a) est agencée de manière à recevoir l'entrée visant à sélectionner la destination de connexion lorsque le terminal portable (10) est amené à proximité d'une unité de lecteur relativement à une destination de connexion affichée par l'unité d'affichage de destination de connexion (31a) ; et
l'unité de lecture d'informations de terminal (33a) est agencée de manière à lire les informations de terminal lorsque le terminal portable (10) est amené à proximité de l'unité de lecteur relativement à la destination de connexion affichée par l'unité d'affichage de destination de connexion (31a).

4. Appareil de connexion (30) selon la revendication 1, comprenant en outre :
une unité de lecture d'informations d'utilisateur (33a) destinée à lire des informations d'utilisateur stockées dans le terminal portable (10) ; et
une unité de transmission (33c) destinée à transmettre les informations d'utilisateur lues par l'unité de lecture d'informations d'utilisateur (33a) connectée à la destination de connexion par l'unité de connexion (33c).

5. Appareil de connexion (30) selon la revendication 4, comprenant en outre une unité de sélection de destination de connexion (33c) destinée à sélectionner, lorsque l'unité de réception de sélection (31a) reçoit une entrée sélectionnant une destination de connexion présentant une pluralité de candidats, l'un des candidats en qualité de destination de connexion, sur la base des informations d'utilisateur lues par l'unité de lecture d'informations d'utilisateur, dans lequel
l'unité de connexion (33c) est agencée de manière à connecter le terminal portable (10) et la destination de connexion sélectionnée par l'unité de sélection de destination de connexion (33c).

6. Appareil de connexion (30) selon la revendication 5, dans lequel l'unité de transmission (33c) est agencée de manière à transmettre des informations de réservation indiquant une demande de réservation d'une installation au niveau de la destination de connexion conjointement avec les informations d'utilisateur.

7. Appareil de connexion (30) selon la revendication 5, comprenant en outre une unité de réception d'entrée (31a) destinée à recevoir une entrée d'informations prédéterminées en provenance de l'utilisateur, dans lequel :
l'unité de transmission (33c) est agencée de manière à transmettre les informations, dont l'entrée est reçue en provenance de l'utilisateur par l'unité de réception d'entrée (31a), à la destination de connexion.

8. Appareil de connexion (30) selon la revendication 2, dans lequel l'unité d'affichage de destination de connexion (31a) est en outre agencée de manière à afficher des informations de disponibilité de réception indiquant si une installation au niveau de la destination de connexion est disponible pour l'utilisateur.

9. Appareil de connexion (30) selon la revendication 2, dans lequel l'unité d'affichage de destination de connexion (31a) est agencée de manière à n'afficher qu'une seule destination de connexion d'une installation qui est disponible pour l'utilisateur conjointement avec l'annonce pour la destination de connexion.

10. Appareil de connexion (30) selon la revendication 8, comprenant en outre une unité de mise à jour (31a) destinée à mettre à jour, lors de la notification d'une modifcation dans les informations de disponibilité de réception par l'installation au niveau de la destination de connexion, les informations de disponibilité de réception affichées par l'unité d'affichage de destination de connexion (31a).

11. Procédé de connexion destiné à permettre à un ordinateur d'établir une connexion, d'un terminal portable (10) comprenant une carte de circuit IC à une destination de connexion, consistant à, par le biais de l'ordinateur :
recevoir une entrée visant à sélectionner une destination de connexion du terminal portable en provenance d'un utilisateur du terminal portable ;
lire, par le biais d'une unité de lecture d'informations de terminal (33a), lors de la réception d'une entrée visant à sélectionner la destination de connexion à l'étape de réception, des informations de terminal stockées dans la carte de circuit IC du terminal portable, à partir de la carte de circuit IC du terminal portable ; et
connecter le terminal portable et la destination de connexion sélectionnée à l'étape de réception, sur la base des informations de terminal lues à l'étape de lecture.

12. Programme informatique qui amène un ordinateur à exécuter les étapes ci-dessous consistant à :
recevoir une entrée visant à sélectionner une destination de connexion d'un terminal portable comportant une carte de circuit IC en provenance d'un utilisateur du terminal portable ;
lire, par le biais d'une unité de lecture d'informations de terminal (33a), lors de la réception d'une entrée visant à sélectionner la destination de connexion à l'étape de réception, des informations de terminal stockées dans la carte de circuit IC du terminal portable, à partir de la carte de circuit IC du terminal portable ; et
connecter le terminal portable et la destination de connexion sélectionnée à l'étape de réception, sur la base des informations de terminal lues à l'étape de lecture.

13. Support d'enregistrement lisible par ordinateur stockant le programme informatique selon la revendication 12.
